# DEMANDE DE BREVET EUROPEEN

(11) **EP 1 422 466 A1**
(43) Date de publication de la demande: **26.05.2004**
(21) Numéro de dépôt: 03292887.1
(22) Date de dépôt: 21.11.2003
(51) Int. Cl.: F16L 59/02

(54) **Fermeture de gaine thermique**

(30) Priorité: 22.11.2002 FR 0214668
(71) Demandeur: L'Atelier d'Ariane, 10000 Troyes (FR)
(72) Inventeur: Van de Casteele, Laurent, 10800 Bucheres (FR)
(74) Mandataire: Debay, Yves

(57) **Abrégé**

La présente invention concerne une gaine (1) thermique composée de fibres de verre recouvertes d'aluminium et comportant une fente longitudinale sur toute sa longueur, caractérisée en ce qu'elle comporte des attaches (10,12) de chaque côté de la fente de la gaine, découpées dans le corps de la gaine (1), permettant l'ouverture et la fermeture de cette gaine par imbrication des attaches (10,12) situées de chaque côté de la fente les unes dans les autres.

## Description

La présente invention concerne un dispositif de fermeture de gaine de protection thermique.

Il existe dans l'art antérieur différentes sortes de gaines et de fermeture de gaines. Les principaux moyens de fermeture sont la soudure, le collage avec un adhésif, la couture avec du fil kevlar, la fermeture avec des boutons pression...

Par exemple, le brevet américain US 6309721 enseigne une gaine ayant une fente longitudinale pour recouvrir les tuyaux ou câbles électriques. Cette gaine est obtenue à partir d'une couche support formée par un monofilament continu de métal plié de manière à faire une continuité de crêtes et de creux. Le monofilament est plié de manière à former un tube comportant une fente avec les creux et les crêtes se faisant face à face. Le moyen de fermeture pour fermer l'ouverture longitudinale formée à la fente est composé d'un rabat comportant des régions adhésives.

Le brevet américain US 6156140 enseigne un procédé pour créer des gaines de protection à partir d'un objet moulé ayant les dimensions de l'objet à protéger. Lorsque la gaine est formée, elle est coupée longitudinalement. Elle est refermée au moyen de rivets, de coutures ou d'adhésifs.

Lors d'entretiens ou de réparations sur les circuits électriques, par exemple, les gaines sont régulièrement ouvertes de manière à effectuer des réparations sur les éléments que la gaine enveloppe et protège. La gaine est ouverte par une fente longitudinale. Lorsque les deux bords de cette fente sont cousus ou soudés ou collés, il est difficile, après ouverture, de refermer cette fente dans la gaine.

Une solution apportée est l'utilisation de rivets ou de boutons pression qui facilitent l'ouverture et la fermeture de la gaine. Cependant, ces boutons ou rivets ne sont pas constitués par le même matériau que la gaine. Le recyclage de la gaine est alors rendu plus difficile du fait de la présence de plusieurs matériaux, dont les procédés de recyclage sont différents.

La présente invention a donc pour objet de pallier les inconvénients de l'art antérieur en proposant une gaine facilement ouvrable et refermable, et facilement recyclable.

Le but de l'invention est atteint par une gaine thermique comportant une fente longitudinale sur toute sa longueur, caractérisée en ce qu'elle est composée de fibres de verre recouvertes d'aluminium et en ce qu'elle comporte des attaches de chaque côté de la fente de la gaine, découpées dans le corps de la gaine, permettant l'ouverture et la fermeture de cette gaine par imbrication des attaches situées de chaque côté de la fente les unes dans les autres.

Selon une autre particularité, les attaches sont composées, d'un côté de la fente, d'une succession de têtes identiques formées par des trapèzes, reposant au centre de leur grande base sur des rectangles de longueur au moins inférieure à la grande base du trapèze, les rectangles se situant sur un bord de la fente de la gaine et les trapèzes s'introduisant dans des attaches en forme de trou rectangulaire situées sur le bord opposé de la fente, en vis à vis de chacun des trapèzes.

Selon une autre particularité, les trous rectangulaires ont une longueur inférieure à la grande base du trapèze, supérieure à la longueur du rectangle et supérieure à la longueur de la petite base du trapèze.

Selon une autre particularité, la distance entre les centres des rectangles des attaches est au moins égale à la longueur de la grande base des trapèzes.

Selon une autre particularité, les attaches en forme de trapèze sont introduites dans les attaches en forme de trou de façon que la languette rectangulaire de l'attache trapèze soit introduite de l'extérieur vers l'intérieur, de manière à ce que cette languette rectangulaire soit au-dessus de la portion de gaine située entre le trou et le bord, l'attache-trapèze se retrouvant à l'intérieur du volume cylindrique défini par la gaine.

Selon une autre particularité, les attaches en forme de trapèze sont introduites dans les attaches en forme de trou de façon que la languette rectangulaire de l'attache trapèze soit introduite de l'intérieur vers l'extérieur, de manière à ce que cette languette rectangulaire soit au-dessous de la portion de gaine située entre le trou et le bord, l'attache-trapèze se retrouvant à l'extérieur du volume cylindrique défini par la gaine.

Selon une autre particularité, les attaches de chaque côté de la fente sont composées d'une succession de trapèzes identiques, dont la petite base est contre la bordure de la fente, les trapèzes étant situés sur chaque bord de la fente, chaque trapèze d'un bord faisant face à l'encoche située entre deux trapèzes du bord opposé de la fente de la gaine.

Selon une autre particularité, la distance entre les petites bases des trapèzes est au moins égale à la longueur de ces petites bases, et inférieure à la longueur des grandes bases.

Selon une autre particularité, les grandes bases des trapèzes de chaque bord opposé de la gaine sont introduites dans les encoches de l'extérieur vers l'intérieur de façon que les languettes se retrouvent à l'intérieur du volume cylindrique défini par la gaine.

Selon une autre particularité, les grandes bases des trapèzes de chaque bord opposé de la gaine sont introduites dans les encoches de l'intérieur vers l'extérieur de façon que les languettes se retrouvent à l'extérieur du volume cylindrique défini par la gaine.

L'invention, avec ses caractéristiques et avantages, ressortira plus clairement à la lecture de la description faite en référence aux dessins annexés dans lesquels :
- les figures 1a et 1b représentent respectivement la vue à plat et la vue en perspective d'une gaine selon une première variante de l'invention ;
- les figures 2a et 2b représentent respectivement la vue à plat et la vue en perspective d'une gaine selon une seconde variante de l'invention ;
- les figures 3a et 3b représentent respectivement la vue en coupe d'une gaine les attaches étant à l'intérieur du volume cylindrique défini par la gaine et respectivement à l'extérieur de ce volume.

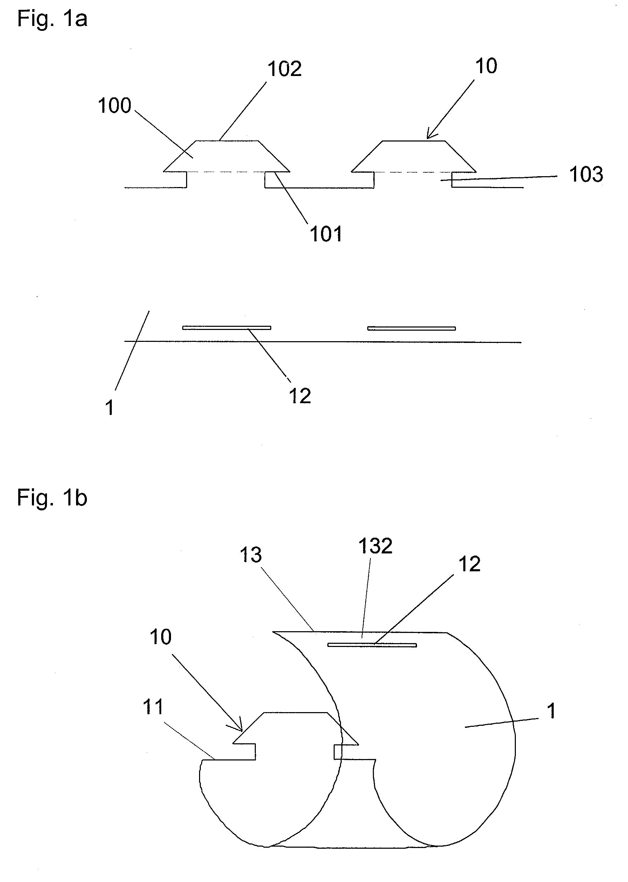

L'invention va à présent être décrite en liaison avec les figures 1 à 3.

L'invention est une gaine thermique (1) composée de fibres d'un matériau tel que le verre recouvert d'une couche d'aluminium. Cette gaine (1) comporte une fente longitudinale afin d'avoir la possibilité de fermer la gaine facilement avec une création de volume lors du montage de la gaine, mais aussi d'ouvrir la gaine et d'effectuer des réparations ou des modifications sur les composants protégés par la gaine (1). Afin de pouvoir ouvrir et fermer la gaine facilement et rapidement, celle-ci possède des attaches (10, 20) sur au moins un côté de la fente, découpées dans le corps de la gaine (1), la pré découpe de ces attaches (10, 20) pouvant être effectuée, par exemple, dans une base en carton.

Un autre avantage de cette fermeture de gaine est la possibilité de transport à plat des corps de gaine avant leur montage, ce qui réduit l'encombrement lors de leur transport. La mise en forme de la gaine est effectuée au dernier moment, lors du montage de la gaine autour des composants à protéger.

Selon une première variante de l'invention correspondant aux figures 1a et 1b, les attaches (10) sont composées d'une succession de têtes identiques en forme de trapèzes (100), reposant au centre de leur grande base (101) sur des rectangles (103), de manière à former une flèche à pointe coupée. La longueur d'un rectangle (103) est au moins inférieure à la longueur de la grande base (101) du trapèze. Les rectangles (103) se situent sur un bord (11) de la fente de la gaine (1). Les flèches sans pointe formant l'attache (10) sur le bord (11) de la fente, s'introduisent dans des trous (12) rectangulaires, ou des fentes, situés sur le bord opposé (13) de la fente de la gaine, en vis à vis de chacune des attaches (10). Ces trous (12) rectangulaires ont une longueur légèrement inférieure à la grande base (101) du trapèze, supérieure à la longueur du rectangle (103) et supérieure à la longueur de la petite base (102) du trapèze, de manière à introduire facilement l'attache (10) dans le trou (12), par exemple par cambrage de l'attache (10) ainsi que de la partie de la gaine comportant le trou (12) correspondant. En effet, la partie de l'attache en forme de trapèze (100) est introduite dans le trou ; la grande base (101) du trapèze étant supérieure à la longueur du trou (12), l'attache ne s'introduit pas entièrement dans le trou (12). Pour cela, un cambrage au niveau de la grande base (101) du trapèze peut être nécessaire pour introduire l'attache (10) dans le trou (12). Une autre possibilité est de présenter, par exemple, le plan formé par l'attache (10) perpendiculairement au plan formé par le trou (12), et d'introduire l'attache (10) en effectuant une légère rotation de manière à présenter un des côtés latéraux du trapèze (100) face au trou (12) et de l'introduire en premier dans ce trou. Lorsque celui-ci est introduit, une rotation inverse couplée à un déplacement latéral de l'attache (10) vers le côté latéral déjà introduit, permet l'introduction du reste de l'attache (10).

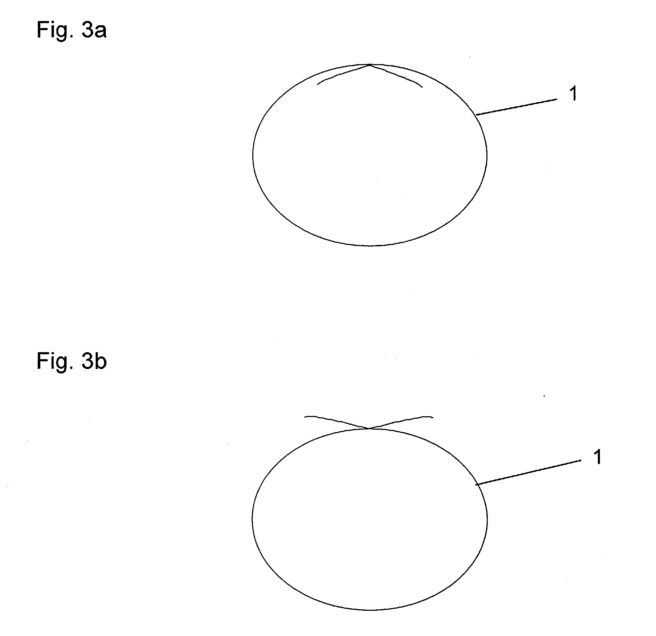

Il existe deux possibilités de fermeture de la gaine. Dans la première possibilité représentée par la figure 3a, les attaches (10) en forme de trapèze sont introduites dans les attaches en forme de trou (12) de façon que la languette rectangulaire (103) de l'attache trapèze (10) soit introduite de l'extérieur vers l'intérieur. La languette rectangulaire (103) se retrouve ainsi au-dessus de la portion (132) de gaine située entre le trou (12) et le bord (13). Le trapèze (10) est alors introduit selon une des méthodes expliquées ci-dessus et se retrouve à l'intérieur du volume cylindrique formé par la gaine (1).

Une seconde possibilité de fermeture, représentée par la figure 3b, propose que les attaches (10) en forme de trapèze soient introduites dans les attaches en forme de trou (12) de façon que la languette rectangulaire (103) de l'attache trapèze (10) soit introduite de l'intérieur vers l'extérieur. La languette rectangulaire (103) se retrouve au-dessous de la portion (132) de gaine située entre le trou (12) et le bord (13). Le trapèze (10) est alors introduit selon une des méthodes expliquées ci-dessus et se retrouve à l'extérieur du volume cylindrique formé par la gaine (1).

La distance entre les centres des rectangles (103) des attaches (10) est au moins égale à la longueur de la grande base (101) des trapèzes, de manière à ne pas avoir un recouvrement des trapèzes (100).

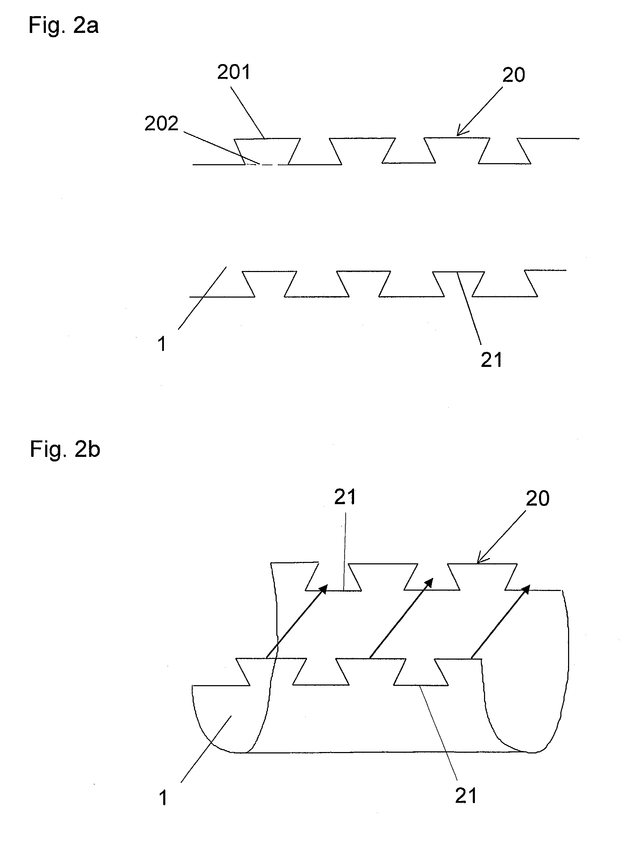

Selon une seconde variante de l'invention correspondant aux figures 2a et 2b, les attaches (20) sont composées d'une succession de trapèzes (200) identiques, de type queue d'hirondelle, dont la petite base (202) est contre la bordure de la fente. Les attaches (20) en forme de trapèze se situent sur chaque bord de la fente, chaque attache (20) située sur un bord de la fente faisant face à l'encoche (21) située entre deux attaches-trapèze (20) situées sur le bord opposé de la fente de la gaine. La distance entre les attaches (20), au niveau de la bordure de la fente, est au moins égale à la longueur des petites bases (202) des trapèzes formant les attaches (20), et elle est inférieure à la longueur des grandes bases (201). La longueur des petites bases (202) des trapèzes peut être inférieure à la distance entre deux grandes bases (201).

Pour fermer la gaine (1), il faut par exemple présenter un côté de la bordure de la fente perpendiculairement au côté opposé. Pour chaque attache (20), une pointe du trapèze peut être insérée dans l'encoche (21) situé en vis à vis de ladite attache (20), puis par une combinaison de rotation, translation dans le sens de la pointe du trapèze introduite, et éventuellement cambrage de l'attache (20), le reste de l'attache est introduite dans l'encoche (21). Cette même opération peut être effectuée pour chaque attache.

Il existe deux possibilités de fermeture de la gaine. Dans la première possibilité représentée par la figure 3a, les grandes bases (201) des attaches (20) en forme trapèzes de chaque bord opposé de la gaine (1) sont introduites dans les encoches (21) de l'extérieur vers l'intérieur de façon que les attaches (20) se retrouvent à l'intérieur du volume cylindrique défini par la gaine (1).

Une seconde possibilité de fermeture, représentée par la figure 3b, propose que les grandes bases (201) des attaches (20) en forme trapèzes de chaque bord opposé de la gaine (1) sont introduites dans les encoches (21) de l'intérieur vers l'extérieur de façon que les attaches (20) se retrouvent à l'extérieur du volume cylindrique défini par la gaine (1).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Gaine (1) thermique comportant une fente longitudinale sur toute sa longueur, **caractérisée en ce qu'**elle est composée de fibres de verre recouvertes d'aluminium et **en ce qu'**elle comporte des attaches de chaque côté de la fente de la gaine, découpées dans le corps de la gaine (1), permettant l'ouverture et la fermeture de cette gaine par imbrication des attaches situées de chaque côté de la fente les unes dans les autres.

2. Gaine (1) thermique, selon la revendication 1, **caractérisée en ce que** les attaches (10) sont composées, d'un côté de la fente, d'une succession de têtes identiques en forme de trapèze (100), reposant au centre de leur base principale (101) sur des rectangles (103) de longueur au moins inférieure à la grande base (101) du trapèze, les rectangles (103) se situant sur un bord (11) de la fente de la gaine (1) et les trapèzes (100) s'introduisant dans des trous (12) rectangulaires situés sur le bord opposé (13) de la fente, en face de chacune des attaches (10).

3. Gaine (1) thermique, selon les revendications 1 et 2, **caractérisée en ce que** les trous (12) rectangulaires ont une longueur inférieure à la grande base (101) du trapèze, supérieure à la longueur du rectangle (103) et supérieure à la longueur de la petite base (102) du trapèze.

4. Gaine (1) thermique, selon les revendications 1 à 3, **caractérisée en ce que** la distance entre les centres des rectangles (103) des attaches (10) est au moins égale à la longueur de la grande base (101) des trapèzes.

5. Gaine (1) thermique, selon les revendications 1 à 4, **caractérisée en ce que** les attaches (10) en forme de trapèze sont introduites dans les attaches en forme de trou (12) de façon que la languette rectangulaire (103) de l'attache trapèze (10) soit introduite de l'extérieur vers l'intérieur, de manière à ce que cette languette rectangulaire (103) soit au-dessus de la portion de gaine (132) située entre le trou (12) et le bord (13), l'attache-trapèze (10) se retrouvant à l'intérieur du volume cylindrique défini par ladite gaine (1).

6. Gaine (1) thermique, selon les revendications 1 à 4, **caractérisée en ce que** les attaches (10) en forme de trapèze sont introduites dans les attaches en forme de trou (12) de façon que la languette rectangulaire (103) de l'attache trapèze (10) soit introduite de l'intérieur vers l'extérieur, de manière à ce que cette languette rectangulaire (103) soit au-dessous de la portion de gaine (132) située entre le trou (12) et le bord (13), l'attache-trapèze (10) se retrouvant à l'extérieur du volume cylindrique défini par ladite gaine (1).

7. Gaine (1) thermique, selon la revendication 1, **caractérisée en ce que** les attaches (20) de chaque côté de la fente sont composées d'une succession de trapèzes (200) identiques, dont la petite base (200) est contre la bordure de la fente, les trapèzes (200) étant situés sur chaque bord de la fente, chaque trapèze (200) d'un bord faisant face à l'encoche (21) située entre deux trapèzes du bord opposé de la fente de la gaine.

8. Gaine (1) thermique, selon les revendications 1 et 7, **caractérisée en ce que** la distance entre les petites bases (200) des trapèzes est au moins égale à la longueur de ces petites bases (200), et inférieure à la longueur des grandes bases (201).

9. Gaine (1) thermique, selon les revendications 1, 7 et 8, **caractérisée en ce que** les grandes bases (201) des trapèzes de chaque bord opposé de la gaine sont introduites dans les encoches (21) de l'extérieur vers l'intérieur de façon que les attaches (20) se retrouvent à l'intérieur du volume cylindrique défini par la gaine (1).

10. Gaine (1) thermique, selon les revendications 1, 7 et 8, **caractérisée en ce que** les grandes bases (201) des trapèzes de chaque bord opposé de la gaine sont introduites dans les encoches (21) de l'intérieur vers l'extérieur de façon que les attaches (20) se retrouvent à l'extérieur du volume cylindrique défini par la gaine (1).
